# EUROPÄISCHE PATENTSCHRIFT

(11) **EP 3 687 853 B1**
(45) Veröffentlichungstag und Bekanntmachung des Hinweises auf die Patenterteilung: **23.02.2022**
(21) Anmeldenummer: 18786685.0
(22) Anmeldetag: 28.09.2018
(51) Int. Cl.: B60N 2/07, F16C 29/00, F16C 29/10

(54) **ENDKAPPE FÜR EINE SCHIENE EINER SCHIENENVERSTELLUNG**
END COVER FOR A RAIL OF A RAIL ADJUSTMENT SYSTEM
COUVERCLE POUR UNE GLISSIERE D'UN SYSTEME DE REGLAGE DE GLISSIERES

(30) Priorität: 28.09.2017 DE 102017217325
(43) Veröffentlichungstag der Anmeldung: 05.08.2020
(73) Patentinhaber: KEIPER Seating Mechanisms Co., Ltd., Shanghai, 201315 (CN)
(72) Erfinder: QUAST, Ingo, 40477 Düsseldorf (DE); SPRENGER, Erik, 42929 Wermelskirchen (DE)
(74) Vertreter: Liedtke & Partner Patentanwälte
(86) Internationale Anmeldenummer: PCT/EP2018/076406
(87) Internationale Veröffentlichungsnummer: WO 2019/063764

(56) Entgegenhaltungen:
- EP-A1- 2 177 391
- EP-A2- 2 371 617
- FR-A1- 2 994 902
- FR-A1- 3 004 150
- JP-A- H1 178 627
- US-A1- 2014 203 157
- US-A1- 2015 090 854

## Beschreibung

### Beschreibung

Die Erfindung betrifft eine Endkappe für eine Schiene einer Schienenverstellung.

Es sind Betätigungselemente für eine Schienenverstellung bekannt, welche als ein Bügel oder Hebel ausgebildet sind und die mit einer Schienenverriegelung zu dessen Betätigung koppelbar sind. Dabei ist das Betätigungselement in die Schienen hineinragend angeordnet, wobei es infolge von Schwingungen zu Geräuschen bei der Betätigung des Betätigungselementes kommen kann.

Eine Schienenverstellung, welche eine Endkappe umfasst, ist aus der US 2014/203157 A1 bekannt.

Aufgabe der vorliegenden Erfindung ist es, für eine Schiene eine Endkappe anzugeben, die eine Geräuschentwicklung beim Betätigung des Betätigungselementes reduziert oder gar verhindert.

Die Aufgabe wird erfindungsgemäß mit einer Endkappe einer Schiene gelöst, wobei die Endkappe mit Federelementen versehen ist, die während einer Betätigung des Betätigungselementes oder nach einem Loslassen des Betätigungselementes mit diesem reibend in Kontakt kommen.

Die mit der Erfindung erzielten Vorteile bestehen insbesondere darin, dass die Federelemente, die mit dem Betätigungselement zeitweise, insbesondere während einer Betätigung oder eines Loslassens dieses, kontaktieren, ein einfaches Dämpfungselement ermöglichen, welches aus der Betätigung resultierende Schwingungen dämpft und damit eine Geräuschentwicklung reduziert oder verhindert.

Die Endkappe umfasst insbesondere einen im Wesentlichen U-förmigen oder Omega-förmigen Aufnahmeabschnitt, der an einem Schienenende anordenbar und an diesem fixierbar ist, wobei der Aufnahmeabschnitt mindestens zwei Seitenschenkel und eine zwischen diesen angeordnete Aufnahmeöffnung umfasst, wobei die zwei Seitenschenkel parallel zueinander angeordnet und voneinander beabstandet sind und wobei von dem jeweiligen Seitenschenkel mindestens ein Federelement in Richtung der Aufnahmeöffnung abragt. Die Aufnahmeöffnung dient der Aufnahme des Betätigungselements.

In einer möglichen Ausführungsform ist das jeweilige Federelement als eine aus einer Schenkelwand herausgeschnittene Federzunge ausgebildet.

Dabei können die Federelemente spiegelsymmetrisch zur Längsachse ausgebildet sein. Zusätzlich kann auf der zum jeweiligen Federelement gegenüberliegenden Oberfläche des Seitenschenkels mindestens ein Rastelement vorgesehen sein, welches einer zusätzlichen Fixierung der Endkappe an einer der Schienen des Schienenpaares dient. Alternativ können zur zusätzlichen Fixierung der Endkappe an einer der Schienen vom Aufnahmeabschnitt zusätzlich Haltearme abragen.

Ein erfindungsgemäßes Schienenpaar für einen Fahrzeugsitz umfasst eine erste Schiene und eine zu der ersten Schiene in Längsrichtung verschiebbare zweite Schiene, welche sich mit ihren Schienenprofilen gegenseitig hintergreifen, eine Verriegelungseinheit zur lösbaren Verriegelung der ersten Schiene und zweiten Schiene miteinander, ein Betätigungselement zur Betätigung der Verriegelungseinheit, und eine Endkappe, die an einem Schienenende an der ersten Schiene oder der zweiten Schiene angeordnet ist.

Dabei ist das Betätigungselement derart in das Schienenpaar angeordnet, dass während einer Betätigung des Betätigungselementes zur Entriegelung der Verriegelungseinheit oder nach einem Loslassen des Betätigungselementes nach erfolgter Betätigung die Endkappe mit dem Betätigungselement reibend in Kontakt kommt.

Beispielsweise werden die Federelemente bei einem Kontakt mit dem Betätigungselement gespannt. Hierdurch drücken die Federelemente beispielsweise von außen auf das Betätigungselement, wodurch mögliche Schwingungen infolge der Betätigung gedämpft oder unterdrückt werden, so dass eine Geräuschentwicklung reduziert bzw. verhindert ist.

In einer einfachen Ausführungsform ist der Aufnahmeabschnitt am Schienenende auf eine Schienenstirnseite form- und/oder kraftschlüssig aufsetzbar. Beispielsweise weist der Aufnahmeabschnitt ein Profil auf, das mit dem Schienenprofil der ersten Schiene oder der zweiten Schiene korrespondiert. Zusätzlich kann die Endkappe Haltearme und/oder Rastelemente umfassen, die form- und/oder kraftschlüssig an der ersten Schiene oder der zweiten Schiene eingreifen.

Ausführungsbeispiele der Erfindung werden anhand von Zeichnungen näher erläutert. Dabei zeigen:
- Figur 1: schematisch einen Sitz mit einem Längsversteller in perspektivischer Ansicht,
- Figuren 2 bis 3: schematisch in Draufsicht verschiedene Ausführungsformen einer Endkappe mit verschieden geformten Federelementen,
- Figuren 4 und 5: schematisch ein Ausführungsbeispiel einer Schiene mit Endkappe und einem montierten Betätigungselement,
- Figur 6: schematisch eine Explosionsdarstellung einer Schiene mit Endkappe und eines Betätigungselementes,
- Figuren 7 und 8: schematisch in Ansicht von unten eine Schiene mit Endkappe und montierten Betätigungselement,
- Figuren 9 bis 16: schematisch verschiedene Darstellungen der Endkappe in verschiedenen Zuständen unter Weglassung der Schiene und des Betätigungselementes, und
- Figuren 17 und 18: schematisch in perspektivischer Darstellung das Verformungsverhalten der Endkappe anhand einer FEM-Darstellung (FEM = Finite-Elemente-Methode = Festigkeits- und Verformungsuntersuchung).

Einander entsprechende Teile sind in allen Figuren mit den gleichen Bezugszeichen versehen.

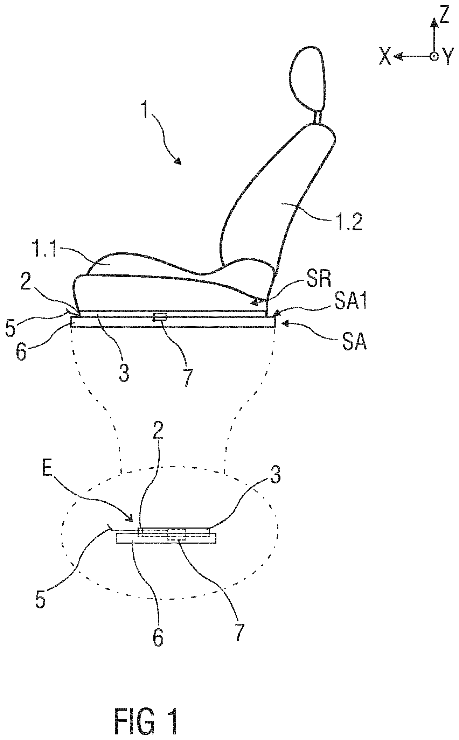

**Figur 1** zeigt schematisch eine Seitenansicht eines Fahrzeugsitzes 1 mit einer Schienenanordnung SA.

Eine Anordnung des Fahrzeugsitzes 1 im Fahrzeug wird dabei anhand des nachfolgend verwendeten Koordinatensystems definiert, umfassend eine einer Hochrichtung des Fahrzeugs zugeordneten Hochachse Z, eine einer Längsrichtung des Fahrzeugs zugeordneten Längsachse X und eine einer Querrichtung des Fahrzeugs zugeordneten Querachse Y.

Der Fahrzeugsitz 1 umfasst beispielsweise eine Sitzfläche 1.1 und eine an der Sitzfläche 1.1 angeordneten Rückenlehne 1.2. Weiterhin umfasst der Fahrzeugsitz 1 eine Sitzstruktur SR, die beispielsweise mit der Sitzfläche 1.1 versehen ist und der Schienenanordnung SA gekoppelt ist. Insbesondere ist die Sitzstruktur SR an einem Schienenpaar SA1 der Schienenanordnung SA befestigt.

**Figur 1** zeigt schematisch in perspektivischer Darstellung einen Teilbereich des Fahrzeugsitzes 1 mit der Sitzstruktur SR, die an zwei Schienenpaaren SA1 befestigt ist.

Das jeweilige Schienenpaar SA1 umfasst eine erste Schiene 3 und eine zweite Schiene 6. Die zweite Schiene 6 ist mit einer nicht näher dargestellten Fahrzeugstruktur verbunden. Die erste Schiene 3 ist zur Einstellung einer Sitzlängsposition des Fahrzeugsitzes 1 relativ zur zweiten Schiene 6, insbesondere einer unteren Sitzschiene, in Längsrichtung X verschiebbar. Dabei ist die erste Schiene 3, insbesondere eine obere Sitzschiene, an der Sitzstruktur SR angeordnet und befestigt.

Die Sitzstruktur SR kann dabei direkt an der ersten Schiene 3 befestigt sein.

Im dargestellten Ausführungsbeispiel erfolgt die Sitzverstellung manuell mittels eines Betätigungselements 5. Das Betätigungselement 5 betätigt eine Verriegelungseinheit 7, die in einem zwischen der ersten und der zweiten Schiene 3, 6 gebildeten Innenraum angeordnet ist und die beiden Schienen 3 und 6 lösbar miteinander verriegelt.

Zusätzlich ist an einem der Schienenenden E der ersten oder zweiten Schiene 3 bzw. 6 eine Endkappe 2 angeordnet. Im Ausführungsbeispiel ist die Endkappe 2 an der ersten Schiene 3 angeordnet. Die Endkappe 2 ist insbesondere an jener der beiden Schienen 3 und 6 angeordnet, welche in Betätigungsrichtung des Betätigungselementes 5 liegt.

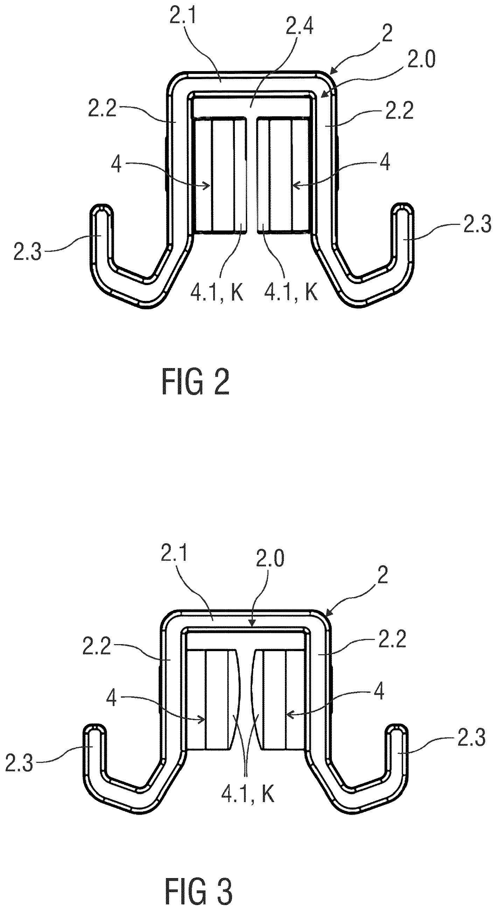

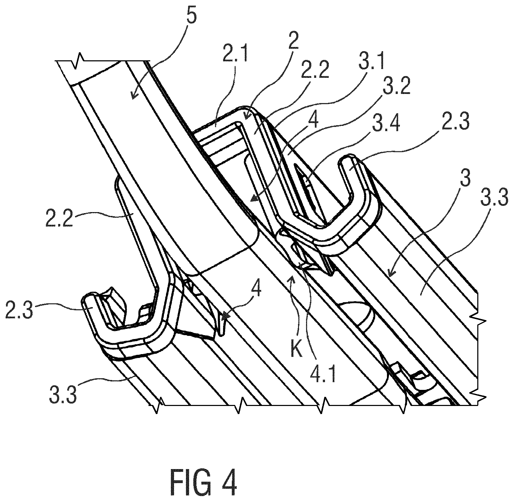

**Figuren 2 bis 3** zeigen schematisch in Draufsicht verschiedene Ausführungsformen einer Endkappe 2 mit verschieden geformten Federelementen 4. Die Endkappe 2 ist als eine auf die erste Schiene 3 (in Figuren 4 bis 8 dargestellt) eines Schienenverstellers aufsteckbare oder aufschiebbare Abdeckung ausgebildet.

Die Endkappe 2 ist mit Federelementen 4 versehen, die als ein Dämpfungselement ausgebildet sind, in welches das Betätigungselement 5 (in Figuren 4 bis 8 dargestellt) bei dessen Betätigung reibend eingreift. Damit kommen die Federelemente 4 während der Betätigung des Betätigungselementes 5 mit diesem reibend in Kontakt und dämpfen aus der Betätigung resultierende Schwingungen und reduzieren demzufolge eine Geräuschentwicklung oder ein Auffedern der ersten Schiene 3. Insbesondere werden sogenannte Schwirr- oder Schnarrgeräusche, welche nach einer Verriegelung beim plötzlichen Loslassen des Betätigungselementes 5 auftreten können, gedämpft und damit reduziert.

Beispielsweise weist die Endkappe 2 eine zu der Querschnittsform und/oder dem Profil der ersten Schiene 3 korrespondierende Querschnittsform bzw. Profil auf.

Die erste Schiene 3 ist als ein Profilelement ausgebildet. Ebenso ist die zweite Schiene 6 als ein Profilelement ausgebildet.

Beispielsweise ist die erste Schiene 3 als ein U-förmiges oder omegaförmiges Profil mit einem Steg 2.1 und mit von diesem senkrecht abragende und im Wesentlichen parallel zueinander angeordnete Seitenschenkeln 2.2, die mittels des Stegs 2.1 verbunden sind, und mit nach außen gebogenen Schenkelenden 2.3 ausgebildet.

Korrespondierend weist die Endkappe 2 als Aufnahmeabschnitt 2.0 einen Steg 2.1 und von diesem senkrecht abragende Seitenschenkel 2.2 und nach außen gebogene Schenkelenden 2.3 auf.

Die Federelemente 4 sind als elastische Elemente, insbesondere Federzungen, ausgebildet. Die Federelemente 4 sind beispielsweise aus Kunststoff oder Metall gebildet. Dabei können die Endkappe 2 und die Federelemente 4 aus Kunststoff gebildet sein. Alternativ kann die Endkappe 2 aus Kunststoff und die Federelemente 4 aus Metall gebildet sein. Insbesondere sind die Federelemente 4 als Blattfedern oder Metallfedern ausgebildet.

In einer möglichen Ausführungsform sind die Federelemente 4 innenseitig an den einander gegenüberliegenden Seitenschenkel 2.2 angeordnet oder ausgebildet. Die Federelemente 4 können integraler Bestandteil der Seitenschenkel 2.2 sein und beispielsweise als ein Formteil mit der Endkappe 2 ausgebildet sein. Alternativ können die Federelemente 4 separat ausgebildet sein und an den Seitenschenkeln 2.2 angeordnet und befestigt sein. Beispielsweise kann das jeweilige Federelement 4 als eine aus einer Schenkelwand herausgeschnittene Federzunge ausgebildet sein.

Dabei ragen die Federelemente 4 nach innen in einen Innenraum 2.4 der Endkappe 2 hinein.

**Figur 2** zeigt ein u-förmiges Profil für eine Endkappe 2. Die Federelemente 4 an den Innenseiten der Seitenschenkel 2.2 sind gleich ausgebildet und weisen Federelementflächen 4.1 auf, welche den Kontaktbereich K mit dem Betätigungselement 5 bei dessen Betätigung bilden.

In **Figur 2** sind die Federelementflächen 4.1 im Nichtgebrauch und somit bei Nichtkontaktierung durch das Betätigungselement 5 im Wesentlichen parallel zueinander angeordnet.

**Figur 3** zeigt eine alternative Ausführungsform für die mit dem Betätigungselement 5 kontaktierenden Federelementflächen 4.1. Diese Federelementflächen 4.1 sind konvex ausgebildet.

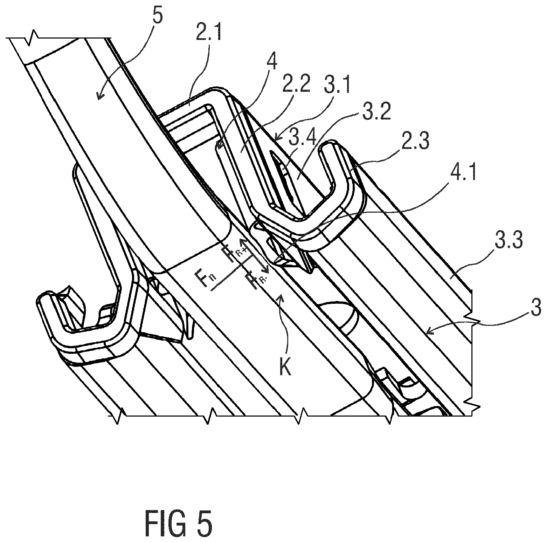

**Figuren 4** **und** **5** zeigen schematisch die erste Schiene 3 mit Endkappe 2 und dem montierten Betätigungselement 5.

In **Figur 5** sind darüber hinausgehend die Kraftrichtungen der Normalkraft Fₙ und der Reibkräfte F_{R+} und F_{R-} dargestellt, die aufgrund des Nachschwingens des Betätigungselementes 5 beim Betätigen dieses, zum Beispiel zum Ver- oder Entriegeln der ersten Schiene 3 und der zweiten Schiene 6 des Schienenverstellers, im Kontaktbereich K an den Federelementen 4 entstehen.

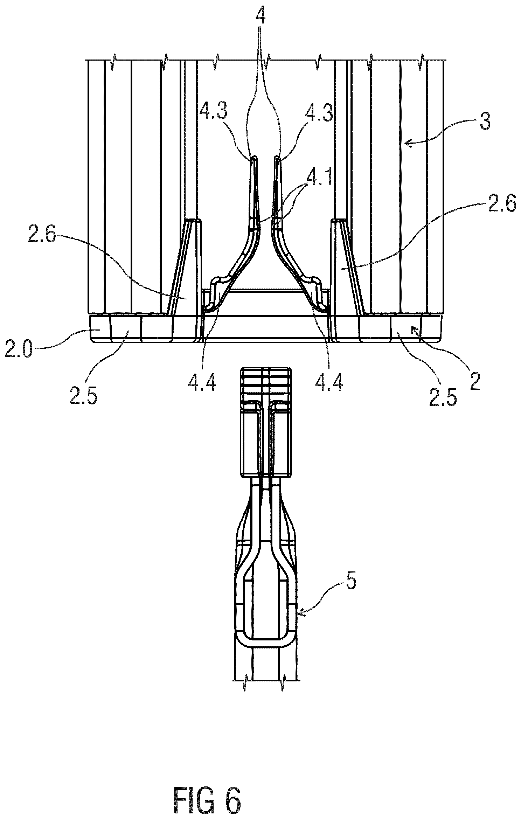

**Figur 6** zeigt schematisch eine Explosionsdarstellung der ersten Schiene 3 mit montierter Endkappe 2 und Federelementen 4 in Ruheposition oder Ausgangsstellung/-lage und vor einer Montage des Betätigungselementes 5. In diesem Zustand sind die Federelemente 4 entspannt und liegen im Wesentlichen einander parallel gegenüber. Die Federelemente 4 sind mittels Gelenke 4.2, insbesondere Biege- oder Stoffgelenke, an den Haltearmen 2.6 angelenkt. Dabei sind die Federelemente 4 mittels der Gelenke 4.2 schwenkbar an den Haltearmen 2.6 gehalten. Beispielsweise können die Gelenke 4.2 mittels Materialeinsparung, zum Beispiel einer Kerbe (auch Kerbgelenk genannt), gebildet sein. Die Federelemente 4 sind als Lasche ausgebildet. Die Federelemente 4 sind derart im Bereich der Gelenke 4.2 gebogen geformt, dass freie Federenden 4.3 im Wesentlichen parallel zu den Haltearmen 2.6 ausgerichtet sind.

Die Endkappe 2 weist im Querschnitt das U-Profil auf, das von außen auf einer Stirnseite der ersten Schiene 3 aufgesteckt oder aufgeschoben ist. Dabei weist die Endkappe 2 einen umlaufenden Rand 2.5 auf, der in Überdeckung mit der Stirnseite der Schiene 3 auf dieser angeordnet ist. Dabei kann der Rand 2.5 innen- und/oder außenseitig die Stirnseite der ersten Schiene 3 überdecken. Auch kann der Rand 2.5 unterschiedlich groß die Stirnseite der ersten Schiene 3 überdecken.

Darüber hinaus ist die Endkappe 2 form- und/oder kraftschlüssig auf der Stirnseite der ersten Schiene 3 angeordnet. Beispielsweise weist die Endkappe 2 eine solche Form und/oder solche Abmessungen auf, dass der Rand 2.5 kraftschlüssig, insbesondere reibschlüssig, auf der Stirnseite der ersten Schiene 3 gehalten ist. Zusätzlich kann die Endkappe 2 in die erste Schiene 3 hineinragende Haltearme 2.6, insbesondere Rastarme, aufweisen, die zusätzlich der Befestigung der Endkappe 2 an der ersten Schiene 3 dienen. Hierzu weist die erste Schiene 3 korrespondierend ausgebildete Rastaufnahmen 3.4, wie sie in Figuren 3 und 4 gezeigt sind, oder geeignete Rastöffnungen auf.

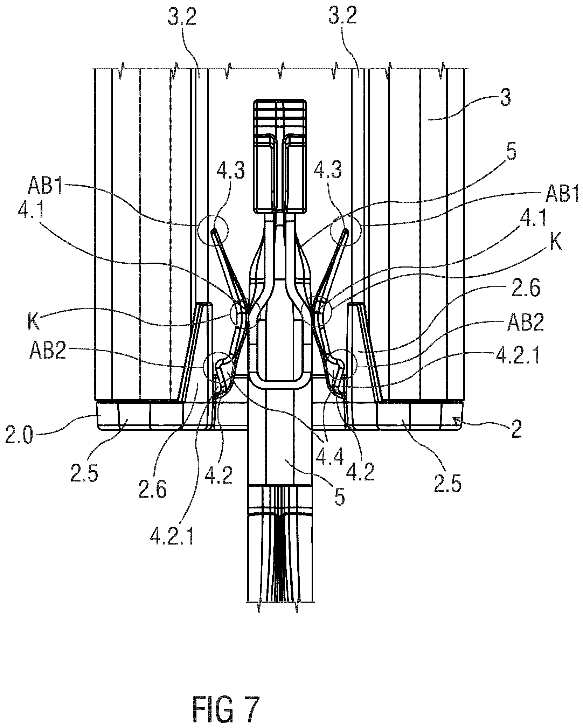

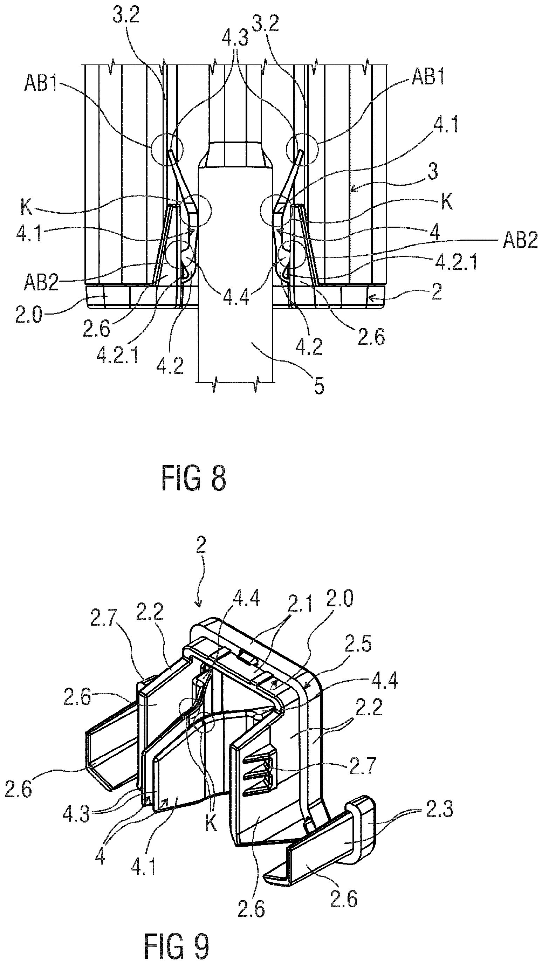

**Figuren 7** **und** **8** zeigen schematisch in Ansicht von unten die Schiene 3 mit montierter Endkappe 2 und teilweise bzw. vollständig montiertem Betätigungselement 5, das während seiner Betätigung, zum Beispiel einer Betätigung zur Entriegelung oder beim Loslassen, in Eingriff mit der Endkappe 2 gelangt.

Das Einführen des Betätigungselementes 5 in den Innenraum 2.4 der auf der ersten Schiene 3 montierten Endkappe 2 während der Betätigung des Betätigungselements 5 bewirkt ein Aufbiegen der Federelemente 4 um die Gelenke 4.2, wie in **Figur 7** dargestellt. Dabei kann es zu einem Abstützen der Federelemente 4 in mindestens einem der oder in mehreren der Anlagenbereiche AB1, AB2 an der Endkappe 2 und/oder der Schiene 3 kommen. Beispielsweise können die Federelemente 4 mit einem freien Federende 4.3 in einem Anlagenbereich AB1 an den Seitenschenkel 3.2 der Schiene 3 in Anlage kommen.

Darüber hinaus können die Federelemente 4 Abstützflächen 4.4 aufweisen. Die Abstützflächen 4.4 sind beispielsweise von den Federelementen 4 abragende Profile, wie Rippen, Noppen oder ähnliches. Die Abstützflächen 4.4 ragen in Abstützrichtung vom Federelement 4, beispielsweise in Richtung der Endkappe 2, ab. Bei eingesetztem Betätigungselement 5 können die Abstützflächen 4.4 im Anlagenbereich AB2 in Anlage mit den Haltearmen 2.6 der Endkappe 2 gelangen.

**Figur 8** zeigt das Betätigungselement 5 in montierter Endlage oder in einer Stellung während einer Betätigung, insbesondere bei einem Loslassen des Betätigungselements 5 nach einer Entriegelung. In dieser Stellung sind die Federelemente 4 über die Kontaktbereiche K der Federelementflächen 4.1 bis zur Anlage im Anlagenbereich AB1 an die Seitenschenkel 3.2 der Schiene 3 weiter gebogen und kommen im Anlagenbereich AB1 in Anlage an die Seitenschenkel 3.2. Ferner kann sich das Federelement 4 im Anlagenbereich AB2 der Haltearme 2.6 abstützen.

Die Gelenke 4.2 sind beispielsweise als sogenannte Filmgelenke oder Filmscharniere bei einer insbesondere als ein Spritzgussteil ausgebildeten Endkappe 2 ausgebildet. Die Gelenke 4.2 verbinden die Federelementflächen 4.1 mit den Seitenschenkel 2.2 der Endkappe 2, die jeweils zueinander beweglich sind. Die Gelenke 4.2 weisen eine Gelenkrille 4.2.1 mit einem stark verjüngtem Querschnitt oder einer dünneren Dicke zwischen den Federelementflächen 4.1 und den Seitenschenkel 2.2 auf.

**Figuren 9 bis 16** zeigen schematisch verschiedene Darstellungen der Endkappe 2 in verschiedenen Zuständen unter Weglassung der ersten Schiene 3 und des Betätigungselementes 5.

**Figur 9** zeigt die Endkappe 2 in der Ausgangs- oder Ruhelage, in welcher kein Betätigungselement 5 in dieser angeordnet ist. Die Endkappe 2 weist den umlaufenden Rand 2.5 auf. Zusätzlich weist die Endkappe 2 vom Rand 2.5 abragende Haltearme 2.6 auf. Die Haltearme 2.6 können zusätzlich mit Rastelementen 2.7 versehen sein, welche im an der Schiene 3 montierten Zustand in korrespondierende Rastaufnahmen (nicht dargestellt) in der Schiene rastend eingreifen. Die Haltearme 2.6 dienen auch der Versteifung der Endkappe 2 und zur Erhöhung der Festigkeit.

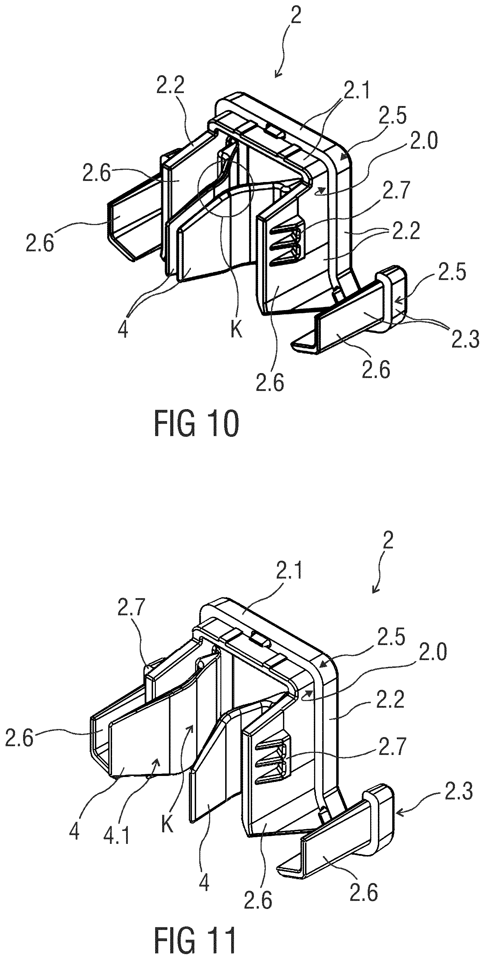

**Figur 10** zeigt die Federelementflächen 4.1 mit dem Kontaktbereich K für das Betätigungselement 5.

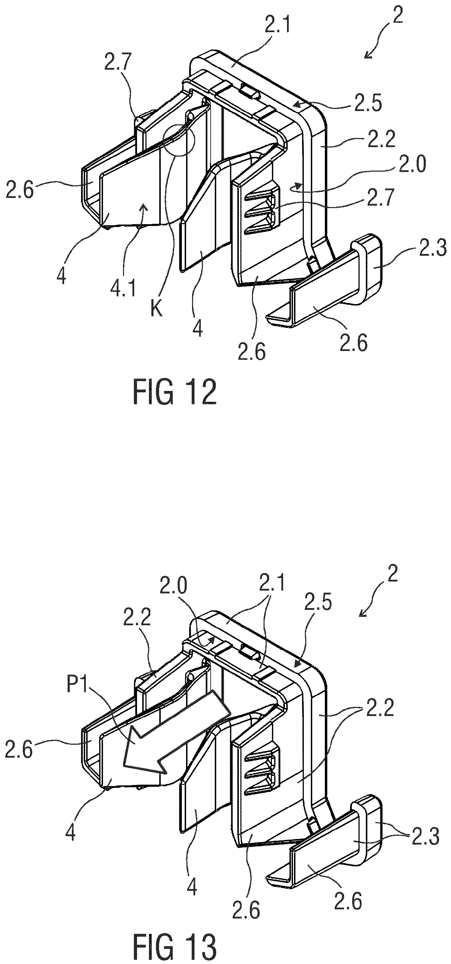

Beim Einschieben des Betätigungselementes 5 in die Endkappe 2 zwischen die beiden Federelemente 4 werden diese nach außen in Richtung der Seitenschenkel 2.2 gedrückt oder gebogen, wie dies in den **Figuren 11** **und** **12** dargestellt ist.

**Figur 13** zeigt einen Pfeil P1, welcher das Einführen des Betätigungselements 5 zwischen die beiden Federelemente 4 in die Endkappe 2 darstellt.

**Figuren 9 bis 13** zeigen die Endkappe 2 ohne Schiene 3 in einer perspektivischen Darstellung auf die im montierten Zustand nach innen in die Schiene 3 gerichteten Komponenten, wie Federelemente 4 und Haltearme 2.6.

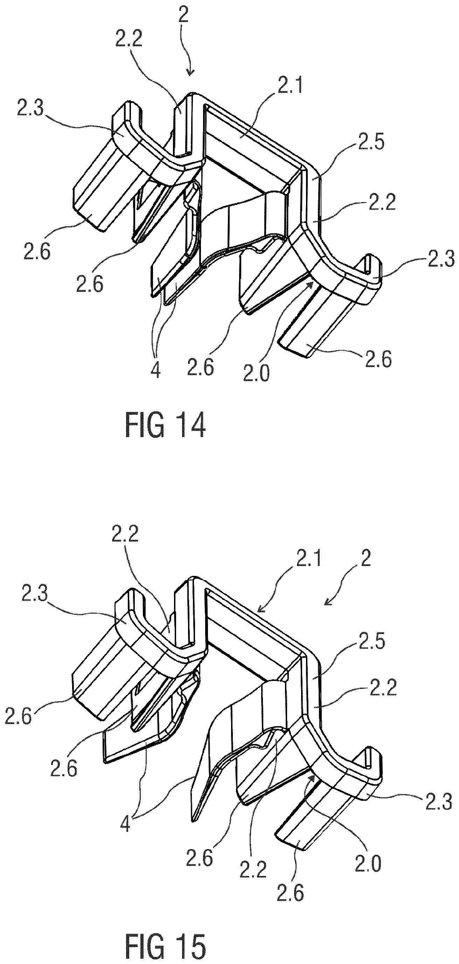

**Figuren 14 bis 16** zeigen die Endkappe 2 ohne Schiene 3 auf den im montierten Zustand auf der Stirnseite der Schiene 3 angeordneten Rand 2.5. Der Rand 2.5 erstreckt sich über das gesamte Querschnittsprofil.

**Figur 14** zeigt die Federelemente 4 der Endkappe 2 in der Ruhe- oder Ausgangslage.

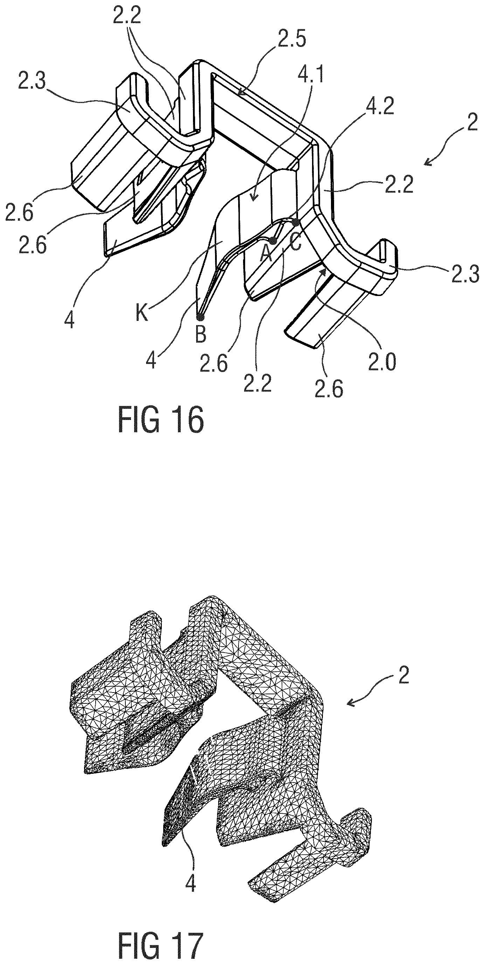

**Figuren 15** **und** **16** zeigen die Federelemente 4 nach dem Einführen des Betätigungselementes 5 (ohne dass dieses dargestellt ist) und in einem nach außen gebogenen Zustand aufgrund der Kontaktierung der Federelemente 4 mit dem Betätigungselement 5 beim Einführen.

**Figur 16** zeigt einen Punkt A des jeweiligen Federelementes 4, welcher das zugehörige Gelenk 4.2 des jeweiligen Federelementes 4 im Punkt C entlastet. Der Punkt A ist vom Federelement 4 als eine Erhebung ausgebildet, die in Richtung des Seitenschenkels 2.2 der Endkappe 2 orientiert ist.

Punkt B stellt denjenigen Bereich des Federelementes 4 dar, welcher in der montierten Endlage des Betätigungselementes 5 in der Endkappe 2 im Anlagebereich AB1 in Anlage mit dem Seitenschenkel 3.2 der Schiene 3 kommt.

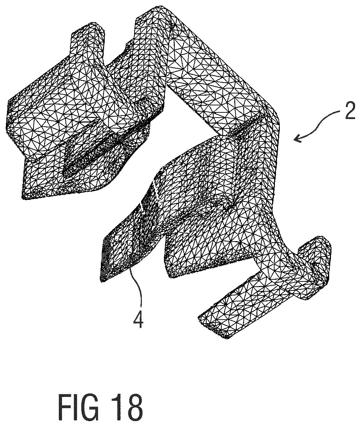

**Figuren 17** **und** **18** zeigen schematisch in perspektivischer Darstellung das Verformungsverhalten der Federelemente 4 der Endkappe 2 anhand einer FEM-Darstellung (FEM = Finite-Elemente-Methode = Festigkeits- und Verformungsuntersuchung).

### Bezugszeichenliste

- 1: Fahrzeugsitz
- 1.1: Sitzfläche
- 1.2: Rückenlehne
- 2: Endkappe
- 2.0: Aufnahmeabschnitt
- 2.1: Steg
- 2.2: Seitenschenkel
- 2.3: Schenkelenden
- 2.4: Innenraum
- 2.5: Rand
- 2.6: Haltearme
- 2.7: Rastelemente
- 3: erste Schiene
- 3.1: Steg
- 3.2: Seitenschenkel
- 3.3: Schenkelenden
- 3.4: Rastaufnahme
- 4: Federelemente
- 4.1: Federelementflächen
- 4.2: Gelenke
- 4.2.1: Gelenkrille
- 4.3: freie Federenden
- 4.4: Abstützflächen
- 5: Betätigungselement
- 6: zweite Schiene
- 7: Verriegelungseinheit

- A,B,C: Punkt
- AB1,AB2: Anlagenbereich
- E: Schienenende
- Fₙ: Normalkraft
- F_{R+}, F_{R-}: Reibekräfte
- K: Kontaktbereich
- P1: Pfeil
- SA: Schienenanordnung
- SA1: Schienenpaar
- SR: Sitzstruktur
- X: Längsachse
- Y: Querachse
- Z: Hochachse

## Patentansprüche

1. Endkappe (2) für eine Schiene (3) einer Schienenverstellung, umfassend einen Aufnahmeabschnitt (2.0), der an einem Schienenende (E) anordenbar und an diesem fixierbar ist,
- wobei der Aufnahmeabschnitt (2.0) mindestens zwei Seitenschenkel (2.2) und eine zwischen diesen angeordnete Aufnahmeöffnung umfasst,
- wobei die zwei Seitenschenkel (2.2) parallel zueinander angeordnet und voneinander beabstandet sind, wobei von dem jeweiligen Seitenschenkel (2.2) mindestens ein Federelement (4) in Richtung der Aufnahmeöffnung abragt, wobei die Federelemente (4) als Dämpfungselement ausgebildet sind, in welches ein Betätigungselement (5) bei dessen Betätigung reibend eingreift.

2. Endkappe (2) nach Anspruch 1, wobei das jeweilige Federelement (4) als eine aus einer Schenkelwand herausgeschnittene Federzunge ausgebildet ist.

3. Endkappe (2) nach Anspruch 1 oder 2, wobei die Federelemente (4) spiegelsymmetrisch zur Längsachse (X) sind.

4. Endkappe (2) nach einem der vorhergehenden Ansprüche, wobei auf der zum jeweiligen Federelement (4) gegenüberliegenden Oberfläche des Seitenschenkels (2.2) mindestens ein Rastelement (2.7) vorgesehen ist oder vom Aufnahmeabschnitt zusätzlich Haltearme abragen.

5. Schienenpaar (SA1) für einen Fahrzeugsitz (1), umfassend
- eine erste Schiene (3) und
- eine zu der ersten Schiene (3) in Längsrichtung (X) verschiebbare zweite Schiene (6), welche sich mit ihren Schienenprofilen gegenseitig hintergreifen,
- eine Verriegelungseinheit (7) zur lösbaren Verriegelung der ersten Schiene (3) und zweiten Schiene (6) miteinander,
- ein Betätigungselement (5) zur Betätigung der Verriegelungseinheit (7), und
- eine Endkappe (2) nach einem der vorhergehenden Ansprüchen, die an einem Schienenende (E) an der ersten Schiene (3) oder der zweiten Schiene (6) angeordnet ist,
wobei die Federelemente (4) während einer Betätigung des Betätigungselementes (5) oder nach einem Loslassen des Betätigungselementes (5) mit diesem reibend in Kontakt kommen.

6. Schienenpaar (SA1) nach Anspruch 5, wobei das Betätigungselement (5) derart an oder in das Schienenpaar (SA1) angeordnet ist, dass während einer Betätigung des Betätigungselementes (5) die Endkappe (2) mit dem Betätigungselement (5) reibend in Kontakt kommt.

7. Schienenpaar (SA1) nach Anspruch 5 oder 6, wobei die Federelemente (4) bei Kontakt mit dem Betätigungselement (5) gespannt werden.

8. Schienenpaar (SA1) nach einem der Ansprüche 5 bis 7, wobei der Aufnahmeabschnitt (2.0) am Schienenende (E) auf eine Schienenstirnseite form- und/oder kraftschlüssig aufsetzbar ist.

9. Schienenpaar (SA1) nach einem der Ansprüche 5 bis 8, wobei der Aufnahmeabschnitt (2.0) ein Profil aufweist, das mit dem Schienenprofil der ersten Schiene (3) oder der zweiten Schiene (6) korrespondiert.

10. Schienenpaar (SA1) nach einem der Ansprüche 5 bis 9, wobei die Haltearme (2.6) und/oder die Rastelemente (2.7) form- und/oder kraftschlüssig an der ersten Schiene (3) oder der zweiten Schiene (6) eingreifen.

## Claims

1. End cap (2) for a rail (3) of a rail adjustment means, comprising a receiving portion (2.0) which is arrangeable at a rail end (E) and fixable thereto,
- wherein the receiving portion (2.0) comprises at least two lateral limbs (2.2) and a receiving opening arranged therebetween,
- wherein the two lateral limbs (2.2) are arranged parallel to each other and are spaced apart from each other, wherein at least one spring element (4) projects from the respective lateral limb (2.2) in the direction of the receiving opening, wherein the spring elements (4) are configured as a damping element in which an actuating element (5) engages in a frictional manner upon actuation thereof.

2. End cap (2) according to Claim 1, wherein the respective spring element (4) is configured as a spring tongue which is cut out of a limb wall.

3. End cap (2) according to Claim 1 or 2, wherein the spring elements (4) are mirror symmetrical with respect to the longitudinal axis (X).

4. End cap (2) according to one of the preceding claims, wherein at least one detent element (2.7) is provided on that surface of the lateral limb (2.2) which lies opposite the respective spring element (4) or supporting arms additionally project from the receiving portion.

5. Rail pair (SA1) for a vehicle seat (1), comprising
- a first rail (3) and
- a second rail (6) which is displaceable with respect to the first rail (3) in the longitudinal direction (X), said first and second rail mutually engaging behind each other by way of their rail profiles,
- a locking unit (7) for releasably locking the first rail (3) and second rail (6) to one another,
- an actuating element (5) for actuating the locking unit (7), and
- an end cap (2) according to one of the preceding claims which is arranged, at a rail end (E), on the first rail (3) or the second rail (6),
wherein, during an actuation of the actuating element (5) or after the actuating element (5) has been released, the spring elements (4) come into frictional contact with said actuating element.

6. Rail pair (SA1) according to Claim 5, wherein the actuating element (5) is arranged on or in the rail pair (SA1) in such a way that the end cap (2) comes into frictional contact with the actuating element (5) during an actuation of the actuating element (5) .

7. Rail pair (SA1) according to Claim 5 or 6, wherein the spring elements (4) are subject to load upon contact with the actuating element (5).

8. Rail pair (SA1) according to one of Claims 5 to 7, wherein the receiving portion (2.0) is placeable, at the rail end (E), on a rail end side in a form-fitting and/or force-fitting manner.

9. Rail pair (SA1) according to one of Claims 5 to 8, wherein the receiving portion (2.0) has a profile which corresponds to the rail profile of the first rail (3) or of the second rail (6).

10. Rail pair (SA1) according to one of Claims 5 to 9, wherein the supporting arms (2.6) and/or the detent elements (2.7) engage on the first rail (3) or the second rail (6) in a form-fitting and/or force-fitting manner.

## Revendications

1. Capuchon d'extrémité (2) pour une glissière (3) d'un dispositif de réglage à glissières, comprenant une section de réception (2.0), qui peut être agencé à une extrémité de glissière (E) et qui peut être fixé à celle-ci,
- la section de réception (2.0) comprenant au moins deux branches latérales (2.2) et une ouverture de réception agencée entre celles-ci,
- les deux branches latérales (2.2) étant agencées parallèlement l'une à l'autre et étant espacées l'une de l'autre, au moins un élément ressort (4) faisant saillie en direction de l'ouverture de réception à partir de la branche latérale respective (2.2), les éléments ressorts (4) étant configurés en tant qu'élément d'amortissement, dans lequel un élément d'actionnement (5) s'engage par friction lors de son actionnement.

2. Capuchon d'extrémité (2) selon la revendication 1, dans lequel l'élément ressort respectif (4) est configuré sous la forme d'une languette flexible découpée à partir d'une paroi de branche.

3. Capuchon d'extrémité (2) selon la revendication 1 ou 2, dans lequel les éléments ressorts (4) présentent une symétrie miroir par rapport à l'axe longitudinal (X).

4. Capuchon d'extrémité (2) selon l'une quelconque des revendications précédentes, dans lequel au moins un élément d'encliquetage (2.7) est prévu sur la surface de la branche latérale (2.2) opposée à l'élément ressort respectif (4) ou des bras de retenue font en outre saillie à partir de la section de réception.

5. Paire de glissières (SA1) pour un siège de véhicule (1), comprenant :
- une première glissière (3) et
- une deuxième glissière (6) déplaçable par rapport à la première glissière (3) dans la direction longitudinale (X), qui s'engagent mutuellement l'une derrière l'autre avec leurs profils de glissière,
- une unité de verrouillage (7) pour le verrouillage détachable de la première glissière (3) et de la deuxième glissière (6) l'une avec l'autre,
- un élément d'actionnement (5) pour l'actionnement de l'unité de verrouillage (7), et
- un capuchon d'extrémité (2) selon l'une quelconque des revendications précédentes, qui est agencé à une extrémité de glissière (E) sur la première glissière (3) ou la deuxième glissière (6),
pendant un actionnement de l'élément d'actionnement (5) ou après une libération de l'élément d'actionnement (5), les éléments ressorts (4) venant en contact de friction avec celui-ci.

6. Paire de glissières (SA1) selon la revendication 5, dans laquelle l'élément d'actionnement (5) est agencé sur ou dans la paire de glissières (SA1) de telle sorte que, pendant un actionnement de l'élément d'actionnement (5), le capuchon d'extrémité (2) vient en contact de friction avec l'élément d'actionnement (5).

7. Paire de glissières (SA1) selon la revendication 5 ou 6, dans laquelle les éléments ressorts (4) sont tendus lors d'un contact avec l'élément d'actionnement (5).

8. Paire de glissières (SA1) selon l'une quelconque des revendications 5 à 7, dans laquelle la section de réception (2.0) à l'extrémité de glissière (E) peut être placée sur un côté frontal de glissière par accouplement de forme et/ou de force.

9. Paire de glissières (SA1) selon l'une quelconque des revendications 5 à 8, dans laquelle la section de réception (2.0) présente un profil qui correspond au profil de glissière de la première glissière (3) ou de la deuxième glissière (6).

10. Paire de glissières (SA1) selon l'une quelconque des revendications 5 à 9, dans laquelle les bras de retenue (2.6) et/ou les éléments d'encliquetage (2.7) s'engagent par accouplement de forme et/ou de force sur la première glissière (3) ou la deuxième glissière (6).
